# EUROPÄISCHE PATENTANMELDUNG

(11) **EP 3 508 928 A1**
(43) Veröffentlichungstag der Anmeldung: **10.07.2019**
(21) Anmeldenummer: 18150860.7
(22) Anmeldetag: 09.01.2018
(51) Int. Cl.: G05B 19/042, G05B 23/02, G06F 11/07, G06F 9/54

(54) **VERFAHREN ZUM VERARBEITEN VON ALARMEN IN EINEM PROZESSLEITSYSTEM SOWIE OPERATOR-SYSTEM**

(71) Anmelder: Siemens Aktiengesellschaft, 80333 München (DE)
(72) Erfinder: Lutz, Benjamin, 76327 Pfinztal (DE)

(57) **Zusammenfassung**

Die Erfindung betrifft ein Verfahren zum Verarbeiten von Alarmen in einem Prozessleitsystem, wobei
- in einer Equipment-Hierarchie (7) durch einen Operator selektierbare Knoten (8, 9) strukturiert hinterlegt sind, welche Prozessobjekte und weitere Objekte des Prozessleitsystems repräsentieren,
- zumindest ein Operator-Server (2) des Prozessleitsystems ein Prozessabbild (6) aufweist, das versehen ist mit zu Prozessobjekten gehörigen Prozessabbild-Bausteinen (14, 15),
- zumindest ein Automatisierungsgerät (3) versehen ist mit zu den Prozessobjekten gehörigen Automatisierungs-Bausteinen (16, 17), und
- mittels eines User-Interface (18) die Equipment-Hierarchie (7) darstellbar ist.

Es werden geeignete Maßnahmen vorgeschlagen, mittels deren einem Operator anhand der Equipment-Hierarchie eine verbesserte Eingrenzung von Alarmen auf Prozessobjekte sowie Objekte des Prozessleitsystems ermöglicht wird.

## Beschreibung

Die Erfindung betrifft ein Verfahren zum Verarbeiten von Alarmen in einem Prozessleitsystem gemäß dem Oberbegriff des Anspruchs 1. Die Erfindung betrifft ferner ein Operator-System gemäß dem Oberbegriff des Anspruchs 4 zur Durchführung des Verfahrens.

Die Prozessobjekte einer zu steuernden technischen Anlage, z. B. Prozessobjekte in Form von Messstellen, Tanks, Ventile, Sensoren, Aktuatoren, ..., sowie weitere Objekte des Prozessleitsystems, beispielsweise Anlagenbilder, Strukturordner, so genannte Continuous Function Charts (CFCs) und Sequential Function Charts (SFCs) und Batch-Objekte werden gewöhnlich in einer so genannten Equipment-Hierarchie (EQH) strukturiert. Diese Equipment-Hierarchie wird von einem Anwender zunächst mittels einer geeigneten Software eines Engineering-Systems erstellt und anschließend mittels des Engineering-Systems kompiliert und in Operator-Server von Operator-Systemen eines Prozessleitsystems geladen (Compile & Download), wobei zur Laufzeit der Operator-Systeme bzw. des Prozessleitsystems die Equipment-Hierarchie als zentrale Anlaufstelle z. B. für einen Batchprozess oder zur Navigation bzw. zur Ermittlung eines Prozessobjektes innerhalb der Equipment-Hierarchie genutzt wird. Die Equipment-Hierarchie, welche gewöhnlich in Teil-Equipment-Hierarchien zur Hinterlegung auf mehrere Operator-Server unterteilt wird, weist durch Operatoren selektierbare Knoten auf, welche die Prozessobjekte und die weiteren Objekte des Prozessleitsystems repräsentieren, wobei jeder Knoten auf ein Prozessobjekt oder auf eines der weiteren Objekte referenziert. Ein Operator kann z. B. einerseits durch Selektion bzw. durch Anklicken eines Anlagenbild-Knotens das entsprechende Anlagenbild zur Darstellung auf einer Anzeigeeinheit öffnen, und andererseits durch Selektion bzw. durch Anklicken eines Prozessobjekt-Knotens ein diesem Prozessobjekt zugehöriges Faceplate öffnen, wodurch der Operator das Prozessobjekt bedienen kann.

Es wird darauf hingewiesen, dass ein Prozessobjekt mehrere zusammengehörige Facetten aufweist. Beispielsweise umfasst ein Prozessabbild eines Servers eines Operator-Systems zu diesen Prozessobjekten gehörige Prozessabbild-Bausteine bzw. bedien- und beobachtungsrelevante Prozessdaten dieser Prozessobjekte, ein Automatisierungsgerät zu den Prozessobjekten gehörige Automatisierungsbausteine bzw. Steuerbausteine (CFCs, SFCs, ...) und ferner ein User-Interface eines Clients des Operator-Systems zu den Prozessobjekten gehörige Blocksymbole eines Anlagenbildes sowie so genannte Faceplates, wobei die Anlagenbilder zur Prozessbeobachtung und die Faceplates zur Prozessführung bzw. Prozessbedienung vorgesehen sind.

Die Equipment-Hierarchie dient - wie erläutert - z. B. zur "Navigation" durch einen Operator, wobei der Operator über die Equipment-Hierarchie Objekte bzw. Dokumente (CFC Online, SFC Online, Anlagenbilder) zur Laufzeit öffnen kann, Informationen über Alarme, die auf Prozessstörungen hinweisen, sind aus der Equipment-Hierarchie allerdings nicht zu entnehmen.

Der Erfindung liegt daher die Aufgabe zugrunde, ein Verfahren der eingangs genannten Art anzugeben, mittels dessen einem Operator eine verbesserte Eingrenzung von Alarmen auf Prozessobjekte sowie Objekte des Prozessleitsystems ermöglicht wird. Darüber hinaus ist ein Operator-System gemäß dem Oberbegriff des Anspruchs 4 zu schaffen, welches zur Durchführung des Verfahrens geeignet ist.

Diese Aufgabe wird im Hinblick auf das Verfahren durch die im kennzeichnenden Teil des Anspruchs 1 angegebenen, bezüglich des Operator-Systems durch die im kennzeichnenden Teil des Anspruchs 4 angegebenen Maßnahmen gelöst.

Vorteilhaft ist, dass ein effizienteres und verbessertes Alarmmanagement durch die Bestimmung alarmgebender bzw. Alarm erzeugender Dokumente, Strukturen und Prozessobjekte in der zur Laufzeit dynamisierten technologischen Hierarchie (Equipment-Hierarchie) ermöglicht wird, wobei Alarmschwallverursacher besser zu beherrschen sind.

Die Erfindung geht von der Idee aus, Korrelationen zwischen den Alarmen der Prozessobjekte zu den weiteren Objekten des Prozessleitsystems, beispielsweise Anlagenbilder, Strukturordner, so genannte Continuous Function Charts (CFCs) und Sequential Function Charts (SFCs) und Batch-Objekte, Geräte, ... herzustellen, so dass eine entsprechende Dynamisierung der Prozessobjekte und Objekte der Equipment-Hierarchie möglich ist.

In einer Ausgestaltung der Erfindung gemäß den im Anspruch 2 angegebenen Maßnahmen wird aus den jeweiligen Prozessabbild-Bausteinen eine Anlagenbild-Angabe ausgelesen. Eine derartige Angabe weist darauf hin, in welchen Anlagenbildern das jeweilige Prozessobjekt alarmgebend bzw. Alarm erzeugend ist.

In einer weiteren Ausgestaltung der Erfindung werden durch entsprechende Filterfunktionen die Visualisierung der Dynamisierungen reduziert, um zur Laufzeit die Lokalisierung von Alarmen und deren Auswirkung auf Dokumente, Strukturen und Geräte zielgerichtet gestalten zu können.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Form:
- Figur 1: Bestandteile eines Leitsystems,
- Figur 2: eine Equipment-Hierarchie und ein Anlagenbild und
- Figur 3 bis 6: Auszüge einer Equipment-Hierarchie.

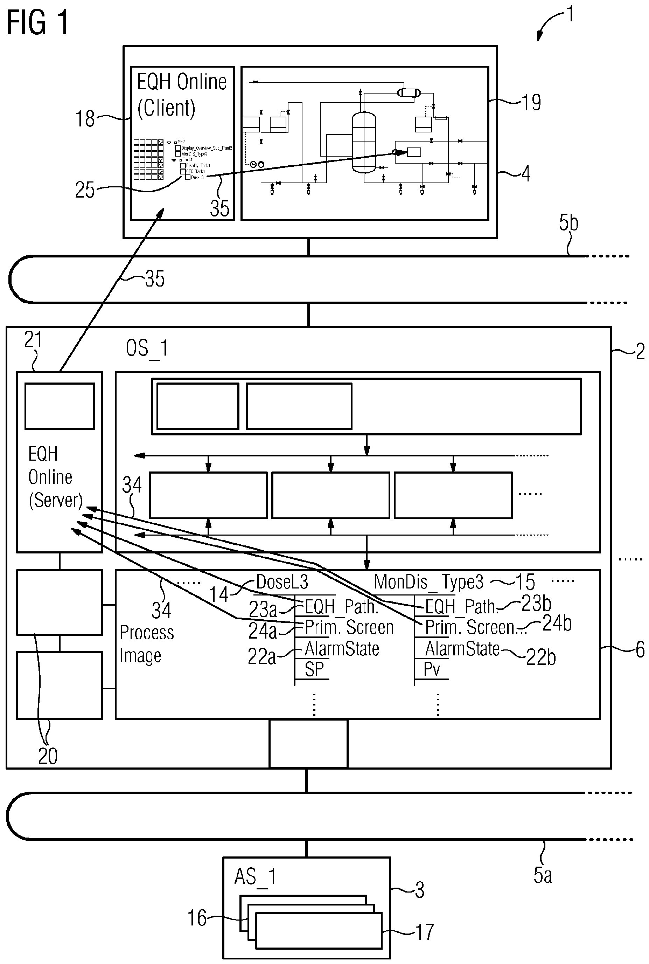

Die in den Figuren 1 bis 6 dargestellten gleichen Teile sind mit gleichen Bezugszeichen versehen.

In Figur 1 sind mit 1 Bestandteile eines Prozessleitsystems bezeichnet, die im vorliegenden Ausführungsbeispiel ein Operator-Server 2 sowie ein Automatisierungsgerät 3 und einen Operator-Client 4 umfassen. Das Prozessleitsystem kann selbstverständlich eine Vielzahl von Automatisierungsgeräten aufweisen, die einerseits über einen Plant-Bus 5a mit dem Operator-Server 2 und andererseits über einen weiteren hier nicht dargestellten Bus mit dezentralen Peripherien verbunden sind, an welche eine Vielzahl von Feldgeräten (Sensoren, Aktuatoren) angeschlossen sind. Ferner sind im vorliegenden Beispiel lediglich ein Operator-Server 2 und ein Operator-Client 4 dargestellt. Selbstverständlich können weitere Operator-Server und OS-Clients vorgesehen sein, wobei gewöhnlich jeweils ein Operator-Server und ein Operator-Client ein Operator-System bzw. eine Operator-Station bilden und die Operator-Clients sowie die Operator-Server an einen Terminal-Bus 5b angeschlossen sind.

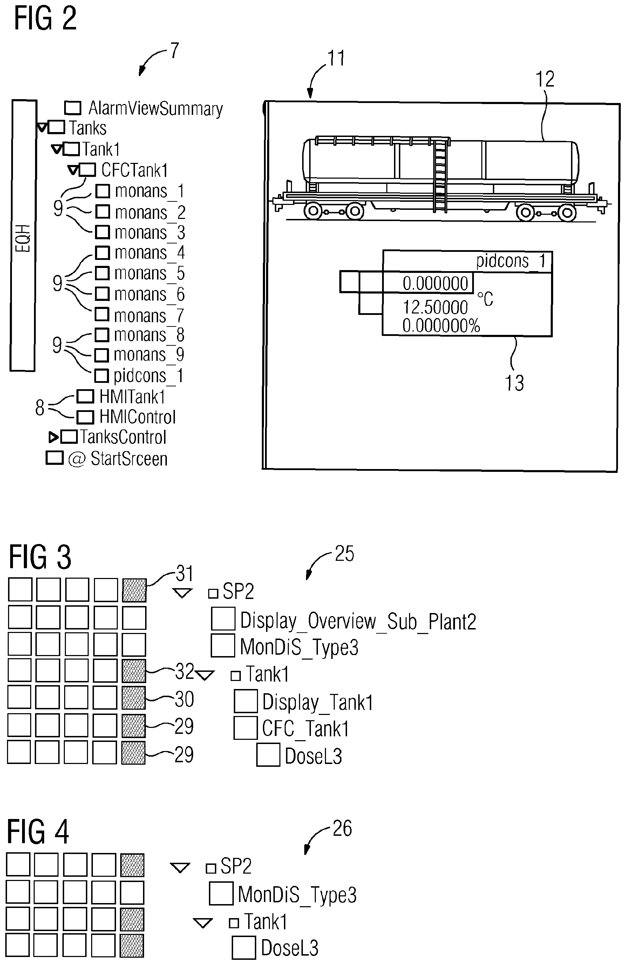

Ein Anwender erstellt mittels einer geeigneten Software eines hier nicht dargestellten Engineering-Systems des Prozessleitsystems eine Equipment-Hierarchie (EQH) 7 (Figur 2), welche eine technologische Sicht einer zu steuernden technischen Anlage repräsentiert. In dieser Equipment-Hierarchie 7 sind strukturiert gemäß einer Baumstruktur Knoten 8, 9 eingetragen bzw. hinterlegt, von denen die Knoten 9 Prozessobjekte, beispielsweise Überwachungs- und Reglerobjekte ("monans_1", ..., "pidcons_1") und die Knoten 8 weitere Objekte in Form von Anlagenbilder, z. B. "HMITank1" und "HMIControl", und Objekte bzw. Dokumente in Form von CFC-Plänen, repräsentieren.

Die jeweiligen Anlagenbilder können online, d. h. während der Prozesssteuerung - geöffnet werden, indem zur Prozessbeobachtung ein Operator jeweils den entsprechenden Anlagenbild-Knoten 8 der Equipment-Hierarchie 7 selektiert bzw. mittels einer "Maus" anklickt, wodurch das dem selektierten Anlagen-Knoten zugehörige Anlagenbild geöffnet und auf dem Operator-Client 4 dargestellt wird. Das vorliegende Beispiel zeigt einen Ausschnitt eines Anlagenbildes 11, das ein grafisches Bildsymbol 12 und ein zu einem Prozessobjekt gehöriges Block-Symbol 13 umfasst, wobei das Block-Symbol 13 zur Prozessbeobachtung vorgesehen ist und aktuelle Prozesswerte, Parameter und Alarmkennzeichnungen dieses Prozessobjektes während der Prozesssteuerung anzeigt.

Im Hinblick auf eine Prozessführung kann der Operator z. B. dieses Prozessobjekt - beispielsweise durch Ändern des Sollwerts und/oder weiteren Parameter - beeinflussen, indem er den entsprechenden Knoten 9 für dieses Prozessobjekt in der Equipment-Hierarchie 7 selektiert bzw. "anklickt". Dadurch wird ein zu diesem Prozessobjekt gehöriges hier nicht dargestelltes zur Prozessführung vorgesehenes Faceplate geöffnet und auf dem Operator-Client 4 dargestellt, wobei dieses Faceplate entsprechende Felder zum Eingeben, Ändern und/oder Löschen von Parametern des Prozessobjektes aufweist.

Es wird darauf hingewiesen, dass unter dem Begriff "Prozessobjekt" die jeweiligen Facetten eines Prozessobjektes verstanden wird, die im Operator-Client 4, in einem Prozessabbild 6 des Operator-Servers 2 und im Automatisierungsgerät 3 hinterlegt sind. So weist z. B. das Prozessabbild 6 des Operator-Servers 2 des Operator-Systems zu Prozessobjekten gehörigen Prozessabbild-Baustein 14, 15, das Automatisierungsgerät 3 zu diesen Prozessobjekten gehörige Automatisierungsbausteine 16, 17 und ferner ein User-Interface 18 des Operator-Clients 4 ein zu diesen Prozessobjekten gehöriges Faceplate sowie Blocksymbole eines Anlagenbildes 19 auf.

Der Operator-Server 2 ist dazu ausgebildet, alle während der Prozesssteuerung auftretenden Alarme der jeweiligen Prozessobjekte auf einen Alarm-Tag 22a, 22b des zu dem jeweiligen Prozessobjekt gehörigen Prozessabbild-Bausteins 14, 15 des Prozessabbildes 6 abzubilden. Diese Alarme weisen auf Prozessstörungen hin und werden mittels des oder der Automatisierungs-Bausteine 16, 17 des Automatisierungsgerätes 3 dem Operator-Server 2 übermittelt.

Zur Verwirklichung einer zur Laufzeit des Prozessleitsystems dynamisierten Equipment-Hierarchie zur Alarmvisualisierung von Prozessobjekten, weiteren Objekten (Dokumenten) sowie Anlagenstrukturen weist der Operator-Server 2 eine Komponente 20 auf, die dazu ausgebildet ist, die Struktur der Equipment-Hierarchie zu ermitteln bzw. zusammenzustellen, indem diese Komponente 20 die auf mehrere Operator-Servern 2, ... verteilten Teil-Equipment-Hierarchien zusammenführt, wobei das User-Interface 18 die Equipment-Hierarchie auf dem Operator Client 18 darstellt. Ferner ist zur Verwirklichung der dynamisierten Equipment-Hierarchie eine Software-Komponente 21 vorgesehen, die mit dem User-Interface 18 in Wirkverbindung steht und die diese Struktur dynamisiert, wobei diese Dynamisierung aus den zu den Prozessobjekten zugehörigen Prozessabbild-Bausteinen 14, 15 abgeleitet wird. Diese Prozessabbild-Bausteine 14, 15 sind jeweils um eine Pfadangabe 23a, 23b ergänzt, um zur Laufzeit prozessobjektorientiert der Software-Komponente 21 die Information bereitzustellen, in welchem Pfad der Equipment-Hierarchie das jeweilige alarmgebende (Alarm erzeugende) Prozessobjekt hinterlegt bzw. zu finden ist. Mit anderen Worten: Die Pfadangaben 23a, 23b beschreiben jeweils den Pfad eines einen Alarm erzeugenden Prozessobjektes innerhalb der technologischen Struktur der Equipment-Hierarchie, wobei im vorliegenden Ausführungsbeispiel angenommen wird, dass diese Prozessobjekte als Dosierungs-Baustein "DoseL3" und als Überwachungs-Baustein "MonDiS_Type3" ausgebildet sind.

Darüber hinaus sind die den Prozessobjekten zugehörigen Prozessabbild-Bausteine 14, 15 um eine Anlagenbild-Angabe 24a, 24b ergänzt, die darauf hinweisen, in welchen Anlagenbildern das jeweilige Prozessobjekt alarmgebend ist, wobei die jeweilige Anlagenbild-Angabe 24a, 24b der Software-Komponente 21 ebenfalls bereitgestellt wird.

Aufgrund der Informationen im Hinblick auf die alarmgebenden Prozessobjekte sowie der jeweiligen Pfadangabe, wobei diese Informationen durch die Software-Komponente 21 aus den Prozessabbild-Bausteinen 14, 15 ausgelesen werden (mit Pfeilen 34 in Figur 1 angedeutet), ist die Software-Komponente 21 in der Lage, zur Laufzeit die Equipment-Hierarchie mit Alarminformationen zu versehen bzw. "anzureichern", wobei diese Alarminformationen sowohl in der Equipment-Hierarchie als auch im Anlagenbild angezeigt werden (mit Pfeilen 35 in Figur 1 angedeutet).

Im Folgenden wird auf Auszüge 25 bis 28 einer Equipment-Hierarchie (Figur 1, Figuren 3 bis 6) Bezug genommen, wobei angenommen wird, dass die Pfadangabe 23a eines alarmgebenden Prozessobjektes "DoseL3" lautet:
".../SP2/Tank1/CFC_Tank1/DoseL3".

Mittels dieser Pfadangabe leitet die Software-Komponente 21 ab, welche Knoten des Steuerbausteins ("CFC") das Prozessobjekt aufweisen bzw. in welchen Knoten der Steuerbausteine ("CFC") das Prozessobjekt "verbaut" ist, um eine Zuordnung des alarmgebenden Prozessobjektes "DoseL3" zu dem Steuerbaustein "CFC_Tank1 abzuleiten, wobei dem Operator die Zuordnung durch eine Alarmmarkierung 29 in der Equipment-Hierarchie 25 angezeigt wird.

Ferner wird im Folgenden angenommen, dass eine Anlagenbild-Angabe 24 (Prim. Screen) eines durch das Prozessobjekt zu alarmierendes Anlagenbildes lautet
".../SP2/Display-Tank1".

Hieraus leitet die Software-Komponente 21 ab, in welchen Knoten der Anlagenbilder der Equipment-Hierarchie das jeweilige Prozessobjekt alarmgebend wirkt, wobei auch hier die Zuordnung durch eine weitere Alarmmarkierung 30 in der Equipment-Hierarchie angezeigt wird.

Aufgrund dessen, dass die alarmgebenden Prozessobjekte den Strukturordnern der Equipment-Hierarchie, beispielsweise dem Strukturordner "SP2" oder "Tank1", unterlagert sind, wird eine Alarmweitergabe von Prozessobjekten an die übergeordneten Strukturknoten für die zur Laufzeit dynamisierte technologische Equipment-Hierarchie ermöglicht. Diese Alarmweitergabe wird dem Operator durch Alarmmarkierungen 31, 32 angezeigt. Die Software-Komponente 21 kann selbstverständlich dazu ausgebildet sein, lediglich die Prozessabbild-Bausteine von Prozessobjekten im Prozessabbild 6 für eine entsprechende Dynamisierung der Equipment-Hierarchie zu berücksichtigen, für die der Operator überhaupt Funktions- bzw. Zugriffsrechte besitzt.

Die Equipment-Hierarchie fällt aufgrund der Vielzahl von Knoten für Prozessobjekte, für weitere Objekte sowie für Dokumente und Strukturordnern sehr komplex aus. Um die Anzeige dieser Equipment-Hierarchie zu reduzieren, ist die Software-Komponente 21 des Operator-Servers dazu ausgebildet, einem Operator Darstellungsfilter bereitzustellen. Zur Laufzeit kann der Operator entsprechende Darstellungsfilter setzen, um die Anzeige der Equipment-Hierarchie zu reduzieren. Beispielsweise werden durch einen entsprechenden Darstellungsfilter sämtliche Dokumente ausgeblendet (Figur 4). Über diese Ansicht kann der Operator unmittelbar erkennen, welche Anlagenteile (Strukturordner-Hierarchie) durch die Alarme von Prozessobjekten betroffen sind und darüber hinaus, welche alarmgebenden Anlagenteile durch welche Prozessobjekte getriggert werden.

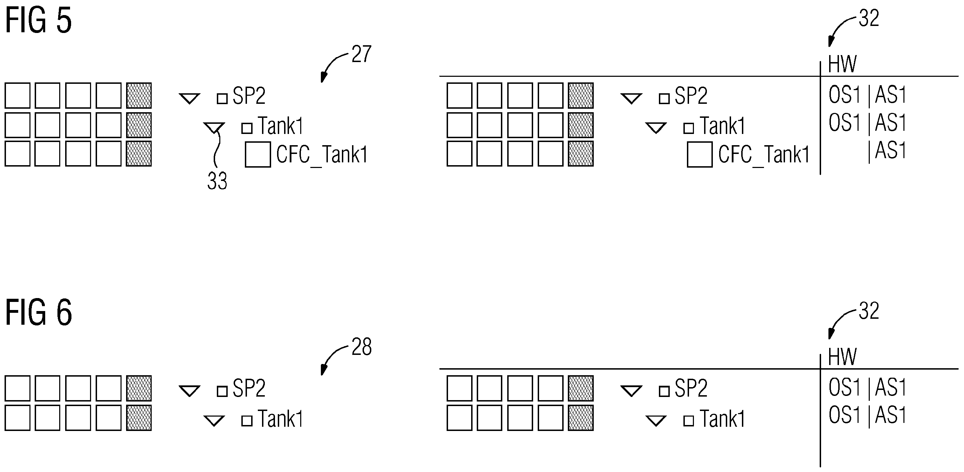

Eine weitere Filtermöglichkeit ist in Figur 5 dargestellt, wobei aufgrund dieser Filterung dem Operator keine Prozessobjekt-Knoten mehr angezeigt werden. Dem Operator werden lediglich die alarmgebenden Steuerbausteine bzw. Messstellen (CFCs) mit entsprechenden Strukturordnern angezeigt. Dabei kann durch die zur Laufzeit mögliche Zusammenführung von Teil-Equipment-Hierarchien auch die "Hardwarezugehörigkeit" von Strukturordnern, Dokumenten und Prozessobjekten abgeleitet und bei Bedarf eingeblendet werden, was in Figur 5 mit Bezugszeichen 32 angedeutet ist. Somit kann der Operator unmittelbar evaluieren, welche Hardware-Quelle eines Alarms eines Prozessobjekts zu Grunde liegt.

Figur 6 zeigt eine "maximale" Reduktion der dynamisierten Equipment-Hierarchie. Es werden lediglich die alarmgebenden Anlagenteile (Strukturordner) dargestellt und mit den Alarmen der zu Grunde liegenden Prozessobjekte dynamisiert.

Selbstverständlich ist es auch möglich, die Darstellung zu reduzieren, indem z. B. ein Symbol 33 (Figur 5) angewählt wird, wodurch die Equipment-Hierarchie an dieser Stelle "zusammengeklappt" wird. Beim "Zusammenklappen" wird nach wie vor die Alarmgebung am Strukturordner dargestellt, lediglich die unterliegenden Details werden verdeckt.

Mittels der beschriebenen Maßnahmen wird ein effizientes und verbessertes Alarmmanagement durch Bestimmung der alarmgebenden Dokumente, Strukturen und Prozessobjekte in zur Laufzeit dynamisierten technologischen Hierarchien ermöglicht. Ferner wird eine schnellere und exaktere Eingrenzung von Alarmen auf Prozessobjekte, Anlagenteile, Messstellen, Dokumente und Hardware sichergestellt und darüber hinaus eine Möglichkeit zur besseren Beherrschung von Alarmschwallverursachern bereitgestellt.

## Patentansprüche

1. Verfahren zum Verarbeiten von Alarmen in einem Prozessleitsystem, wobei
- in einer Equipment-Hierarchie (7) durch einen Operator selektierbare Knoten (8, 9) strukturiert hinterlegt sind, welche Prozessobjekte und weitere Objekte des Prozessleitsystems repräsentieren,
- zumindest ein Operator-Server (2) des Prozessleitsystems ein Prozessabbild (6) aufweist, das versehen ist mit zu Prozessobjekten gehörigen Prozessabbild-Bausteinen (14, 15),
- zumindest ein Automatisierungsgerät (3) versehen ist mit zu den Prozessobjekten gehörigen Automatisierungs-Bausteinen (16, 17),
- mittels eines User-Interface (18) die Equipment-Hierarchie (7) darstellbar ist,
**dadurch gekennzeichnet, dass**
- Alarme der jeweiligen Prozessobjekte auf einen Alarm-Tag (22a, 22b) des zu dem jeweiligen Prozessobjekt gehörigen Prozessabbild-Bausteins (14, 15) abgebildet werden, wobei die Alarme auf Prozessstörungen hinweisen und diese mittels der Automatisierungs-Bausteine (16, 17) des Automatisierungsgerätes (3) dem Operator-Server (2) übermittelt werden,
- aus den jeweiligen Prozessabbild-Bausteinen (14, 15) eine Pfadangabe (23a, 23b) ausgelesen wird, die den Pfad des jeweiligen einen Alarm erzeugenden Prozessobjektes in der Equipment-Hierarchie (7) beschreibt,
- aus der Pfadangabe abgeleitet wird, auf welche Knoten (8, 9) der Prozessobjekte und der weiteren Objekte der Equipment-Hierarchie sich ein Alarm erzeugendes Prozessobjekt auswirkt, wobei die Auswirkungen in der Equipment-Hierarchie angezeigt werden.

2. Verfahren nach Anspruch 1, **dadurch gekennzeichnet, dass** aus den jeweiligen Prozessabbild-Bausteinen (14, 15) eine Anlagenbild-Angabe (24a, 24b) ausgelesen wird, die darauf hinweisen, in welchen Anlagenbildern das jeweilige Prozessobjekt alarmgebend ist.

3. Verfahren nach Anspruch 1 oder 2, **dadurch gekennzeichnet, dass** die Anzeige der Equipment-Hierarchie mittels Darstellungsfilter gefiltert wird.

4. Operator-System für ein Prozessleitsystem, wobei
- in einer Equipment-Hierarchie (7) durch einen Operator selektierbare Knoten (8, 9) strukturiert hinterlegt sind, welche Prozessobjekte und weitere Objekte des Prozessleitsystems repräsentieren,
- zumindest ein Operator-Server (2) des Prozessleitsystems ein Prozessabbild (6) aufweist, das versehen ist mit zu Prozessobjekten gehörigen Prozessabbild-Bausteinen (14, 15),
- zumindest ein Automatisierungsgerät (3) versehen ist mit zu den Prozessobjekten gehörigen Automatisierungs-Bausteinen (16, 17),
- mittels eines User-Interface (18) die Equipment-Hierarchie (7) darstellbar ist,
**dadurch gekennzeichnet, dass** der Operator-Server (2) dazu ausgebildet ist,
- Alarme der jeweiligen Prozessobjekte auf einen Alarm-Tag (22a, 22b) des zu dem jeweiligen Prozessobjekt gehörigen Prozessabbild-Bausteins (14, 15) abzubilden, wobei die Alarme auf Prozessstörungen hinweisen und diese mittels der Automatisierungs-Bausteine (16, 17) des Automatisierungsgerätes (3) dem Operator-Server (2) übermittelt werden,
- aus den jeweiligen Prozessabbild-Bausteinen (14, 15) eine Pfadangabe (23a, 23b) auszulesen, die den Pfad des jeweiligen einen Alarm erzeugenden Prozessobjektes in der Equipment-Hierarchie (7) beschreibt,
- aus der Pfadangabe abzuleiten, auf welche Knoten (8, 9) der Prozessobjekte und der weiteren Objekte der Equipment-Hierarchie sich ein Alarm erzeugendes Prozessobjekt auswirkt, wobei die Auswirkungen in der Equipment-Hierarchie (7) angezeigt werden.

5. Operator-System nach Anspruch 4, **dadurch gekennzeichnet, dass** der Operator-Server dazu ausgebildet ist, aus den jeweiligen Prozessabbild-Bausteinen (14, 15) eine Anlagenbild-Angabe (24a, 24b) auszulesen, die darauf hinweisen, in welchen Anlagenbildern das jeweilige Prozessobjekt alarmgebend ist.

6. Operator-System nach Anspruch 4 oder 5, **dadurch gekennzeichnet, dass** der Operator-Server (20) ferner dazu ausgebildet ist, die Anzeige der Equipment-Hierarchie mittels Darstellungsfilter zu filtern.
